# EUROPEAN PATENT APPLICATION

(11) **EP 2 322 424 A1**
(43) Date of publication of application: **18.05.2011**
(21) Application number: 10188802.2
(22) Date of filing: 26.10.2010
(51) Int. Cl.: B63G 8/42

(54) **System and method for drag reduction in towed marine seismic equipment**

(30) Priority: 12.11.2009 US 590598
(71) Applicant: PGS Geophysical AS, 1366 Lysaker (NO)
(72) Inventor: Harrick, Bruce William, Sugar Land, TX 77498 (US); Stenzel, Andre, Richmond, TX 77469 (US)
(74) Representative: Skone James, Robert Edmund

(57) **Abstract**

A system comprises towed marine seismic equipment marine seismic equipment (10), adapted for towing through a body of water; and a surface covering (30), with longitudinal ribs (40), attached to the marine seismic equipment to reduce drag. A method comprises towing marine seismic equipment having a surface covering, with longitudinal ribs, attached thereto to reduce drag.

## Description

### Field of the Invention

This invention relates generally to the field of geophysical prospecting. More particularly, the invention relates to the field of marine seismic surveys with towed seismic equipment.

### Description of the Related Art

In the oil and gas industry, geophysical prospecting is commonly used to aid in the search for and evaluation of subterranean formations. Geophysical prospecting techniques yield knowledge of the subsurface structure of the earth, which is useful for finding and extracting valuable mineral resources, particularly hydrocarbon deposits such as oil and natural gas. A well-known technique of geophysical prospecting is a seismic survey.

The resulting seismic data obtained in performing a seismic survey is processed to yield information relating to the geologic structure and properties of the subterranean formations in the area being surveyed. The processed seismic data is processed for display and analysis of potential hydrocarbon content of these subterranean formations. The goal of seismic data processing is to extract from the seismic data as much information as possible regarding the subterranean formations in order to adequately image the geologic subsurface. In order to identify locations in the Earth's subsurface where there is a probability for finding petroleum accumulations, large sums of money are expended in gathering, processing, and interpreting seismic data. The process of constructing the reflector surfaces defining the subterranean earth layers of interest from the recorded seismic data provides an image of the earth in depth or time. The image of the structure of the Earth's subsurface is produced in order to enable an interpreter to select locations with the greatest probability of having petroleum accumulations.

In a marine seismic survey, seismic energy sources are used to generate a seismic signal which, after propagating into the earth, is at least partially reflected by subsurface seismic reflectors, Such seismic reflectors typically are interfaces between subterranean formations having different elastic properties, specifically sound wave velocity and rock which lead to differences in acoustic impedance at the interfaces, The reflected seismic energy is detected by seismic sensors (also called seismic receivers) and recorded.

The appropriate seismic sources for generating the seismic signal in marine seismic surveys typically include a submerged seismic source towed by a ship and periodically activated to generate an acoustic wavefield. The seismic source generating the wavefield is typically an air gun or a spatially-distributed array of air guns.

The appropriate types of seismic sensors typically include particle velocity sensors (known in the art as geophones) and water pressure sensors (known in the art as hydrophones) mounted within a towed seismic streamer (also know as a seismic cable). Seismic sensors may be deployed by themselves, but are more commonly deployed in sensor arrays within the streamer.

Seismic sources, seismic streamers, and other attached equipment are towed behind survey vessels, attached by cables. The seismic sources and seismic streamers may be positioned in the water by attached equipment, such as deflectors and cable positioning devices (also known as "birds").

Noise in the recorded seismic signal is caused by, among other things, towing the streamers and other equipment through the water. This towing causes vibrations in the streamers due to turbulent flow past the surface of the equipment. The vibrations lead to additional noise picked up by the detectors in the streamers. Although this vibration noise affects pressure sensors such as the hydrophones typically employed in streamers, the vibration noise has a greater effect on the particle motion sensors such as the geophones additionally employed in dual-sensor streamers.

Reducing the drag due to turbulence on the streamers and other towed equipment would reduce this extra vibration noise, improving the quality of the seismic survey results. Additionally, reducing drag would increase the towing capacity of seismic survey vessels in towed streamer surveys. This increased towing capacity means more and longer streamers for surveying, which makes each pass of the sensor-filled streamers more productive. Further, reduced drag leads to reduced fuel costs for towing the streamers and other equipment.

Thus, a need exists for a system and a method for reducing drag resistance in towed seismic equipment employed in marine seismic surveys, especially in towed streamers.

### Brief Summary of the Invention

The invention is a system and a method for drag reduction for towed marine seismic equipment. In one embodiment, the invention is a system comprising marine seismic equipment adapted for towing through a body of water and a surface covering, with longitudinal ribs, attached to the marine seismic equipment. In another embodiment, the invention is a method comprising towing marine seismic equipment having a surface covering, with longitudinal ribs, attached thereto.

### Brief Description of the Drawings

The invention and its advantages may be more easily understood by reference to the following detailed description and the attached drawings, in which:

FIG. 1 is a schematic plan view of marine seismic survey equipment used with towed streamers;

FIG. 2 is a schematic side view of marine seismic survey equipment used with towed streamers;

FIG. 3 is a schematic plan view of seismic equipment attached to a seismic streamer; and

FIG. 4 is a schematic side view of seismic equipment attached under a seismic streamer.

FIG. 5 is a schematic end view of a surface covering with longitudinal ribs comprising ridges; and

FIG. 6 is a schematic end view of a surface covering with longitudinal ribs comprising grooves.

While the invention will be described in connection with its preferred embodiments, it will be understood that the invention is not limited to these. On the contrary, the invention is intended to cover all alternatives, modifications, and equivalents that may be included within the scope of the invention, as defined by the appended claims.

### Detailed Description of the Invention

The invention is a system and a method for reducing drag in towed marine seismic equipment. The following discussion of the invention will be illustrated in terms of marine surveys involving towed seismic streamers, but this is not a limitation of the invention. Any form of seismic equipment that can and is towed through the water is appropriate for application of the present invention. Drag is reduced on towed seismic equipment by adding longitudinal ribs to the surface of the streamers and the surfaces of any attached equipment. This attached equipment includes, but is not limited to, modules, ballast weights, retrievers, and streamer positioning devices.

A conventional streamer with a smooth skin and smooth hardware surfaces generates flumes of spinning water, known as vortices, as it is towed through the water. The instability of the vortices creates a near wall shear layer. The compounding interaction of the near wall shear layer and further vortices is cyclic and produces a layer of turbulent water around the towed streamer. This produces a high skin friction that is proportional to the speed the streamer is being towed at. The resistance caused by skin friction is called drag. Drag is an undesirable characteristic for towed streamers, as it imposes limitations on the maximum width that can be achieved for multi-streamer 3D configurations. Additionally, higher fuel consumption is required to tow streamers with high drag characteristics compared to streamers with low drag coefficients. Turbulent flow over the streamer skin can also induce noise on the sensors within the streamers.

The introductions of longitudinal ribs that are dimensionally proportional to the size of the vortices keep the vortices away from the streamer surface and also constrain lateral spreading of the vortices, This results in a reduction in friction with an associated reduction in drag. The ribs, also known as riblets, may comprise, in two embodiments, either raised ridges or grooves in the surface covering of the seismic equipment. Both ridges and grooves provide longitudinal channels. In two particular embodiments, the ribs are triangular raised ridges on the surface covering, or are, inversely, triangular grooves in the surface covering to create the same effect.

Over smooth surfaces, fast-moving water begins to break up into turbulent vortices, or eddies, in part because the water flowing at the surface of an object moves slower than water flowing further away from the object. This difference in water speed causes the faster water to form eddies. Over a streamer surface with ribs, however, channeling the water through the grooves or between the ridges decreases the friction of the water flowing along the streamer's body. The channels are so closely spaced that they prevent eddies from coming into contact with the surface of the streamer's moving body, thus reducing the amount of drag.

The ridges or grooves reinforce the direction of flow by channeling it. Forcing water through the narrow channels speeds up the slower water at the streamer skin's surface. Conversely, the channels pull faster water closer toward the streamer's surface so that the faster water mixes with the slower water, reducing the speed differential. Finally, the channels divide up the sheet of water flowing over the streamer's surface so that any turbulence created results in smaller, rather than larger, vortices. Reduction of drag resistance will result in a reduction of fuel costs and more accurate and consistent positioning of streamers. Additionally, the reduced eddy formation at the equipment surfaces will lead to quieter towing, a great benefit in seismic surveying.

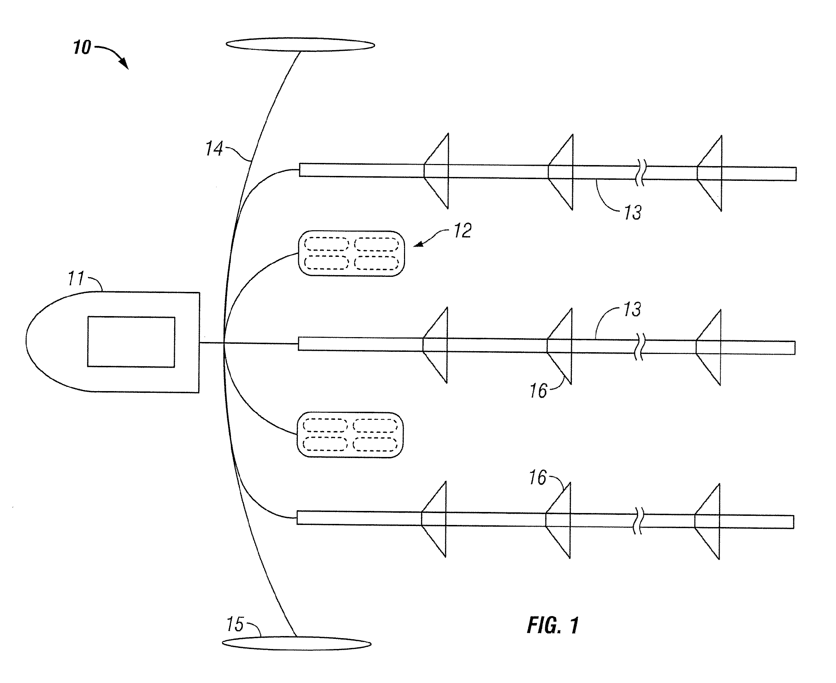

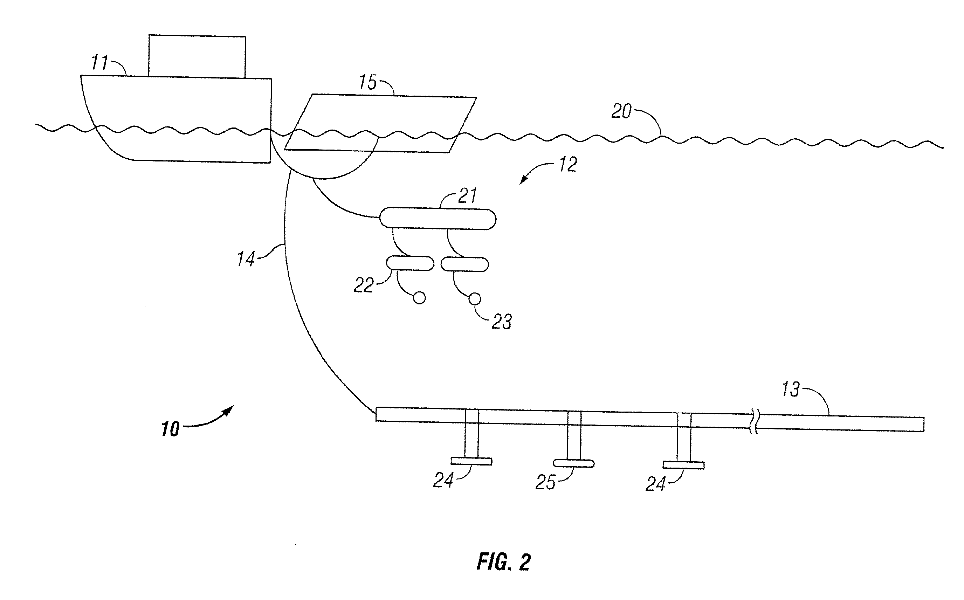

FIGS. 1 and 2 show the typical types of towed marine seismic equipment in which drag can be reduced by various embodiments of the apparatus and method of the invention. FIG. 1 is a schematic plan view (not drawn to scale) of marine seismic survey equipment that could be used with towed streamers.

The towed marine seismic equipment is generally designated by reference numeral 10. A seismic vessel 11 tows seismic sources 12 and seismic streamers 13. Although only two seismic sources 12 and three seismic streamers 13 are shown, this number is just for illustrative purposes only. Typically, there can be more seismic sources 12 and many more seismic streamers 13. The seismic sources 12 and the seismic streamers 13 are connected to the seismic vessel 11 by cables 14. The cables 14 are typically further connected to devices such as deflectors 15 that spread apart the seismic streamers 13. FIG. 1 shows that the seismic streamers 13 may have equipment attached inline or around the streamers 13. The attached equipment can be, by way of example, in-line mounted position control devices 16, such as depth control devices or lateral control devices, as well as acoustic units and retriever units (not shown). The attached equipment also can be, by way of example, sensors of various types, such as depth sensors.

FIG. 2 is a schematic side view (not drawn to scale) of marine seismic survey equipment, including towed streamers. The side view in FIG. 2 corresponds to the plan view of the towed marine seismic equipment shown in FIG. 1.

The seismic vessel 11 towns seismic sources 12 and seismic streamers 13 under the water surface 20. The seismic sources 12 primarily comprise floats 21 and air guns 22, but may also have equipment such as, for example, near-field sensors (hydrophones) 23 attached adjacent the air guns 22. FIG. 2 shows that the seismic streamers 13 may have additional equipment attached below the streamers 13. The attached equipment can be, by way of example, suspended position control devices 24 and suspended sensors 25, as well as acoustic units and retriever units (not shown).

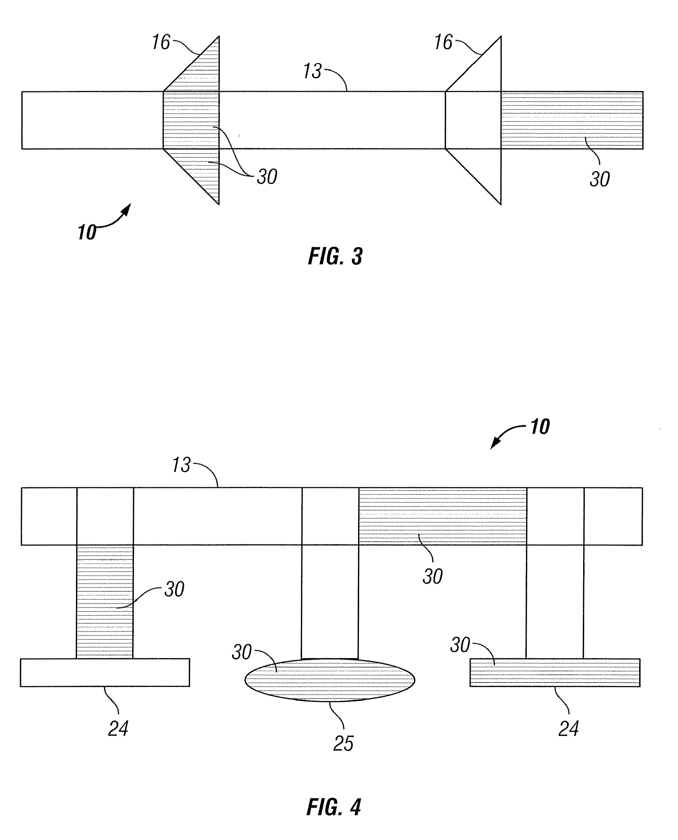

FIGS. 3 and 4 show close-up views of the seismic equipment attached to the seismic streamer in FIGS. 1 and 2, respectively. FIG. 3 is a schematic plan view (not drawn to scale) of seismic equipment attached to a seismic streamer.

Surface coverings 30, with longitudinal ribs 31, are attached to the towed marine seismic equipment 10. In one embodiment, the surface covering 30 is shown covering a portion of the inline position control devices 16 or the seismic streamer 13. These configurations of the surface covering 30 shown here in FIGS. 3 and 4 are for illustrative purposes only and are not meant to limit the invention. The surface covering 30 of the invention can be configured in any appropriate manner and attached in any appropriate manner to any appropriate portion of the towed marine seismic equipment 10.

FIG. 4 is a schematic side view (not drawn to scale) of seismic equipment attached under a seismic streamer. As in FIG. 3 above, the surface covering 30 is shown attached to the towed marine seismic equipment 10. The surface covering 30 are shown attached to appropriate portions of the suspended position control devices 24, suspended sensors 25 or seismic streamers 13. Other configurations of the surface covering 30 are possible and compatible with the invention.

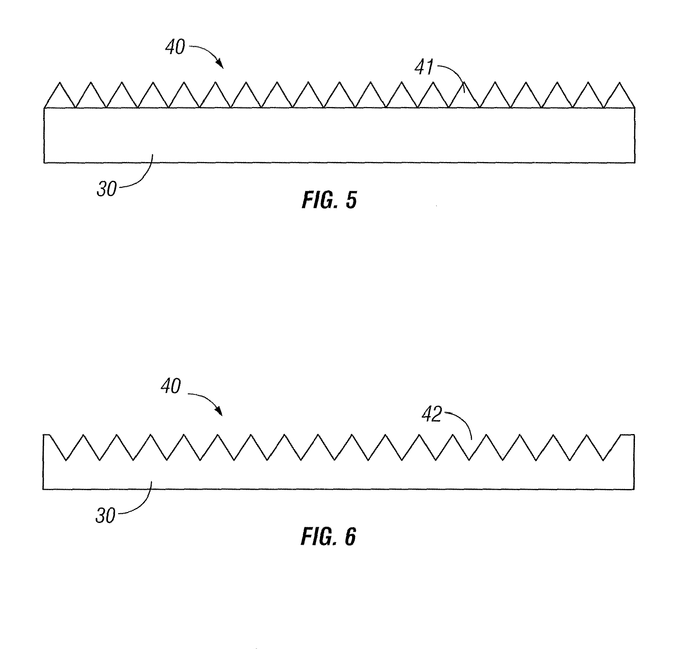

FIG. 5 is a schematic end view (not drawn to scale) of a surface covering with longitudinal ribs comprising ridges. A surface covering 30 is shown in cross section. The longitudinal ribs 40 are shown in one particular embodiment as raised ridges 41 in the surface covering 30. In the particular embodiment illustrated, the raised ridges 41 are shown as triangularly-shaped.

FIG. 6 is a schematic end view (not drawn to scale) of a surface covering with longitudinal ribs comprising grooves. A surface covering 30 is shown in cross section. The longitudinal ribs 40 are shown in one particular embodiment as grooves 42 in the surface covering 30. In the particular embodiment illustrated, the grooves 42 are shown as triangularly-shaped.

In another embodiment, the ridges 41 or grooves 42 in the surface covering 30 are shaped as portions of other regular polygons, rather than triangles, such as hexagons or octagons. In yet another embodiment, the ridges 41 or grooves 42 in the surface covering 30 are shaped as portions of regular curves, such as ellipses or parabolas.

The use of the system of method of the invention will lead to the reduction of noise caused by vibration on sensors in dual-sensor streamers, particularly geophones. The reduction of drag on streamers will produce a reduction in fuel costs. Alternatively, the reduction in drag will produce greater towing capacity, by increasing the number of cables, length of cable, or towing spread for the same fuel costs and towing power of vessel. Additionally, the reduction in drag will lead to a reduction in hardware wear, extended operational life of the towed equipment, and an increased return on initial investment.

## Claims

1. A system for reducing drag in towed marine seismic equipment, comprising:
marine seismic equipment, adapted for towing through a body of water; and
a surface covering, with longitudinal ribs, attached to the marine seismic equipment.

2. The system of claim 1, wherein the marine seismic equipment comprises towed marine seismic streamers.

3. The system of claim 2, wherein the marine seismic equipment further comprises additional equipment attached to the marine seismic streamers.

4. The system of any of the preceding claims, wherein the marine seismic equipment comprises marine seismic sources.

5. The system of any of the preceding claims, wherein the ribs comprise raised ridges, preferably triangularly-shaped ridges, on the surface covering.

6. The system of any of claims 1 to 4, wherein the ribs comprise grooves in the surface covering.

7. The system of claim 6, wherein the grooves comprise triangularly-shaped grooves.

8. A method for reducing drag on marine seismic equipment, comprising:
towing marine seismic equipment having a surface covering, with longitudinal ribs, attached thereto.

9. The method of claim 8, wherein the marine seismic equipment comprises towed marine seismic streamers.

10. The method of claim 9, wherein the marine seismic equipment further comprises additional equipment attached to the marine seismic streamers.

11. The method of any of claims 8 to 10, wherein the marine seismic equipment comprises marine seismic sources.

12. The method of any of claims 8 to 11, wherein the ribs comprise raised ridges on the surface covering.

13. The method of claim 12, wherein the ridges comprise triangularly-shaped ridges.

14. The method of any of claims 8 to 11, wherein the ribs comprise grooves in the surface covering.

15. The method of claim 14, wherein the grooves comprise triangularly-shaped grooves.
